(19)

Europäisches
Patentamt
European
Patent Office
Office européen
des brevets

(11) **EP 2 373 025 A1**

(12) **EUROPEAN PATENT APPLICATION**

(43) Date of publication:
**05.10.2011 Bulletin 2011/40**

(51) Int Cl.:
***H04N 7/24*** *(2011.01)*      ***H04N 7/26*** *(2006.01)*

(21) Application number: **10250696.1**

(22) Date of filing: **31.03.2010**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA ME RS**

(71) Applicant: **British Telecommunications public limited company**
**London EC1A 7AJ (GB)**

(72) Inventor: **The designation of the inventor has not yet been filed**

(74) Representative: **Lau, Chi-Fai**
**British Telecommunications plc**
**Intellectual Property Department, PPC5A**
**BT Centre**
**81 Newgate Street**
**London EC1A 7AJ (GB)**

(54) **Video coding estimation**

(57) The invention presets a method of predicting the state of a buffer at a client, said client configured to receive an encoded video sequence over a transmission channel, wherein said encoded video sequence comprises a plurality of segments and said transmission channel has an associated maximum bit rate, said method comprising: analysing each segment of the encoded video to determine the number of bits associated with each segment; determining an estimated bit rate for the transmission of the encoded video sequence over the transmission channel to the client, said estimated bit rate equal to the lower of a) the maximum bit rate associated with the transmission channel, and b) the average bit rate associated with the encoded video sequence; and calculating a plurality of states of the buffer, each state associated with the time at which a respective segment of the encoded video is received at the client, wherein each state is given by the difference between the estimated transmission rate and the bit rate of the respective segment.

**Figure 1**

**Description**

**Field of the Invention**

This invention relates to video coding, in particular to a method of predicting the state of a buffer at a client that is to receive an encoded video sequence.

**Background to the Invention**

Video compression has become a key technology in digital video communications. Several standards have been established in video compression, such as MPEG-2, MPEG-4, and H.264/AVC. One common feature of these standards is that they only provide the syntax of the compressed video stream. The output bit stream can use either a constant-bit-rate encoding process (CBR) or a variable-bit-rate process (VBR). Since many digital video applications are constrained to a constant channel bandwidth or a fixed storage (buffer) size, CBR encoding is most widely adopted because of its practical implementation. However, CBR encoding suffers from some drawbacks.

Firstly, CBR results in variable visual quality. The amount of compression required can vary significantly between one frame and another, or even between macroblocks within the same frame depending on the complexity of the frame. As a result, the decoded video sequence exhibits variable visual quality. Secondly, it can result in low coding efficiency, as the bit rate selected has to be sufficient to provide an acceptable picture quality for all parts of the transmission. However, this bit rate may be necessarily higher than is required for many parts of the transmission, and where this additional quality may not even be noticeable to the user.

A real video sequence usually consists of many scenes, and each of them may represent very different activity and motion features. Consequently it is desirable that more bits should be allocated to those scenes of high activity whilst fewer bits are required for those of low activity. This is the basis of variable bit rate encoding (VBR). Compared with CBR encoding, VBR encoding can provide less delay, more consistent (or constant) visual quality, and higher coding efficiency for many video sequences. Typically in VBR encoding, the video encoding parameters, primarily the quantisation parameter, are kept constant. However, the perceptual quality may not be constant, as no account is made of the masking capability of the video content being encoded: detailed picture regions are better at masking coding distortion than plain areas.

In WO 09/112801, there is described a VBR encoding method that maintains a constant perceptual quality. Use is made of a perceptual quality metric (one that achieves a good correlation with actual viewer perception by taking into account masking effects) in a video encoder to encode with constant perceptual quality. Coding parameters, specifically the quantisation parameter, used for each frame are set separately and also take into account masking effects based on relative contrast levels in each frame.

However, whilst the above method is effective in producing constant perceptual quality encoded video, like many VBR systems it generates an "unconstrained" bitstream. In other words, operational constraints such as client decoder start-up delay, target bit rate (in practice, there will always be an upper limit on the available bit rate in the transmission channel even for VBR systems) and client buffer size cannot be set before initiating the encoding process even though they impose limitations on a practical encoding process.

**Summary of the Invention**

It is the aim of embodiments of the present invention to address one or more of the above-stated problems. More specifically, embodiments of the present invention provide an improved constant perceptual quality encoding method that takes into account various operational constraints such as the decoding client's buffer size, start-up delay and target bit-rate of the encoded video.

According to a first aspect of the present invention, there is provided a method of predicting the state of a buffer at a client, said client configured to receive an encoded video sequence over a transmission channel, wherein said encoded video sequence comprises a plurality of segments and said transmission channel has an associated maximum bit rate, said method comprising:

(i) analysing each segment of the encoded video to determine the number of bits associated with each segment;
(ii) determining an estimated bit rate for the transmission of the encoded video sequence over the transmission channel to the client, said estimated bit rate equal to the lower of a) the maximum bit rate associated with the transmission channel, and b) the average bit rate associated with the encoded video sequence;
(iii) calculating a plurality of states of the buffer, each state associated with the time at which a respective segment of the encoded video is received at the client, wherein each state is given by the difference between the estimated transmission rate and the bit rate of the respective segment.

The method may further comprise:

(iv) calculating the minimum buffer state from each of the plurality of buffer states, and if the minimum buffer state is less than zero, then calculating the estimated start-up delay at the client to be equal to the ratio of the magnitude of the minimum buffer state and the maximum bit rate of the transmission channel, else calculating the estimated start-up delay to be equal to zero;

(v) comparing the estimated start-up delay against a predetermined target start-up delay for the client.

Preferably, the method includes the further steps of:

(vi) calculating the maximum buffer state from each of the plurality of buffer states, and if the maximum buffer is less than zero, then calculating the estimated minimum client buffer size to be equal to the maximum buffer state summed with the product of the estimated start-up delay and the maximum bit rate of the transmission channel, else calculating the estimated minimum buffer size to be equal to maximum buffer state;

(vii) comparing the estimated minimum buffer size against a predetermined target client buffer size.

If the estimated start-up delay is not greater than the predetermined target start-up delay, and if the estimated minimum buffer size is not greater than the target client buffer size, then the encoded video sequence is transmitted to the client.

The average bit rate associated with the encoded video sequence may be given by the sum of the bits associated with each segment divided by the duration of the video sequence.

Preferably, the video sequence is encoded at a first constant perceptual quality, and if the estimated start-up delay is greater than the predetermined target start-up delay, or if the estimated minimum buffer size is greater than the target client buffer size, then encoding the video sequence with a second perceptual quality, wherein the second perceptual quality is lower than the first perceptual quality.

**Brief Description of the Drawings**

For a better understanding of the present invention reference will now be made by way of example only to the accompanying drawings, in which:

Figure 1 shows a block diagram of a video coder according to an example of the present invention;
Figure 2 is a flow chart illustrating the operation of the video coder of Figure 1 in an example of the present invention;
Figure 3 is a flow chart illustrating the operation of the video coder of Figure 1 in an example of the present invention;
Figure 4 is a flow chart illustrating the operation of the video coder of Figure 1 in an example of the present invention;
Figure 5 illustrates an example encoded video sequence split into segments.

**Description of Preferred Embodiments**

The present invention is described herein with reference to particular examples. The invention is not, however, limited to such examples.

In examples of the present invention, a video stream, or each segment of a video stream, is preferably encoded at a constant quality for the duration of the stream whilst meeting certain practical transmission constraints. Specifically, these constraints are start-up delay at the receiving client, the client buffer size, and a target bit rate for the connection over which the encoded video is to be streamed to the client. The perceptual quality of the encoded video stream can be adjusted in order to meet these constraints, and the methods described herein help to achieve this.

In preferred examples of the invention, multiple-pass video encoding is used, where methods are described for evaluating whether the video stream encoded in a first pass meet the target constraints. Models are then defined for subsequently estimating the perceptual quality that the video stream should be re-encoded at if the constraints are not met during the first pass, using both a rough estimation model and an accurate estimation model.

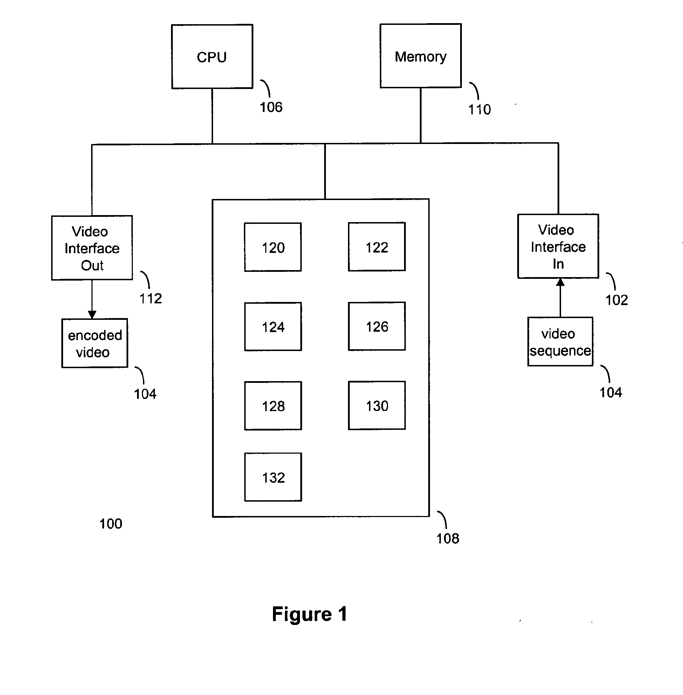

The apparatus 100 shown in Figure 1 comprises a video input interface 102 that receives digitally coded video signals 104, in uncompressed form. A processor 106 operates under the control of program modules stored in the local storage 108, which is typically a hard disk or similar, and has access to memory 110 and a video output interface 112. The video output interface 112 may include a buffer to temporarily store video encoded by the processor 106 before outputting the encoded bit stream 114. The program modules in the store 108 include a general purpose operating system 120 as well as various video coding software modules which implement one or more of the evaluation and coding methods described shortly. The software modules includes: a video splitting module 122, which divides the input video stream into smaller, entropy-related chunks; a control module 124; a video compression module 126, for example operating an encoding algorithm compliant with the ITU H.264 standard; a perceptual quality evaluation module 128; a bitstream evaluation module 130; and a perceptual quality prediction module 132. In examples of the present invention, the encoded bit stream is a variable bit rate (VBR) bit stream.

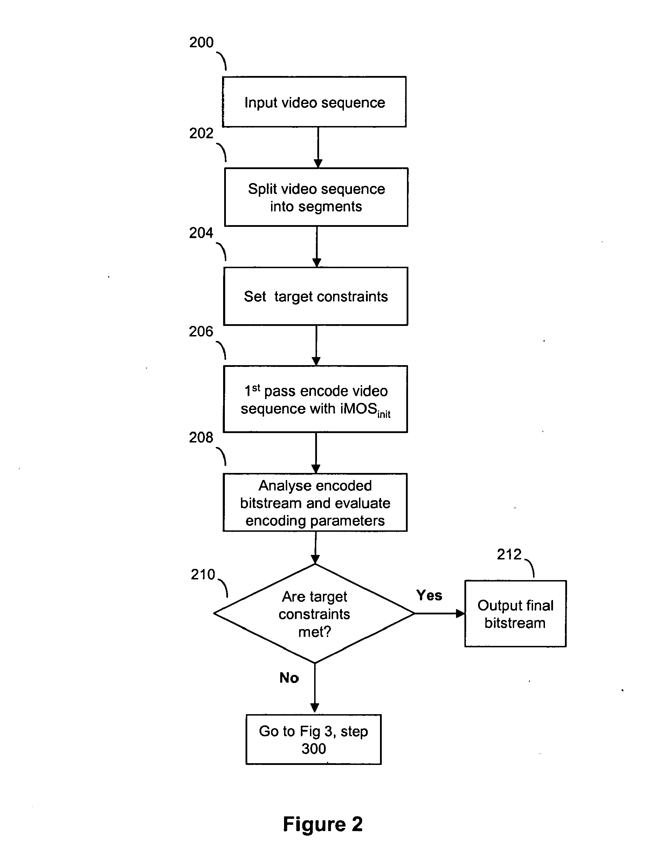

A video coding method according to one example of the invention will now be described with reference to the flowchart of Figure 2.

In step 200, a video sequence 104 is received at the video input interface 102 and stored in the memory 110. The video sequence 104 may be for example a film or television programme. The video sequence 104 is split into smaller chunks in step 202 by the video splitting module 122, where each chunk is independent from other chunk. The significance of splitting the sequence into smaller chunks will become apparent later. However, it should be noted at this stage that the splitting can be done before the encoding step 204, as shown in Figure 2, or performed after the encoding step 204. One important condition is that the rate distortion characteristics of each chunk must be independent from other chunks. In order to achieve that, each chunk should preferably start with a key frame, such as a I-frame (intra frame) or a P-frame (predicted frame). Furthermore, each chunk is typically the minimum sized stand-alone logical video unit comprising of one or more consecutive frames that can be fully decoded without reference to any other chunks. In MPEG-2, a group of pictures (GOP) could be considered as a chunk.

One way to split the sequence prior to encoding is to look for scene changes, where there are natural breaks in the sequence. This can be done by evaluating the average contrast of the pixels in each unencoded frame, and comparing it to the next frame in the sequence. Any difference in the average contrast above a certain threshold is likely to indicate a change in scene, and thus a good point at which to split the sequence into a new segment.

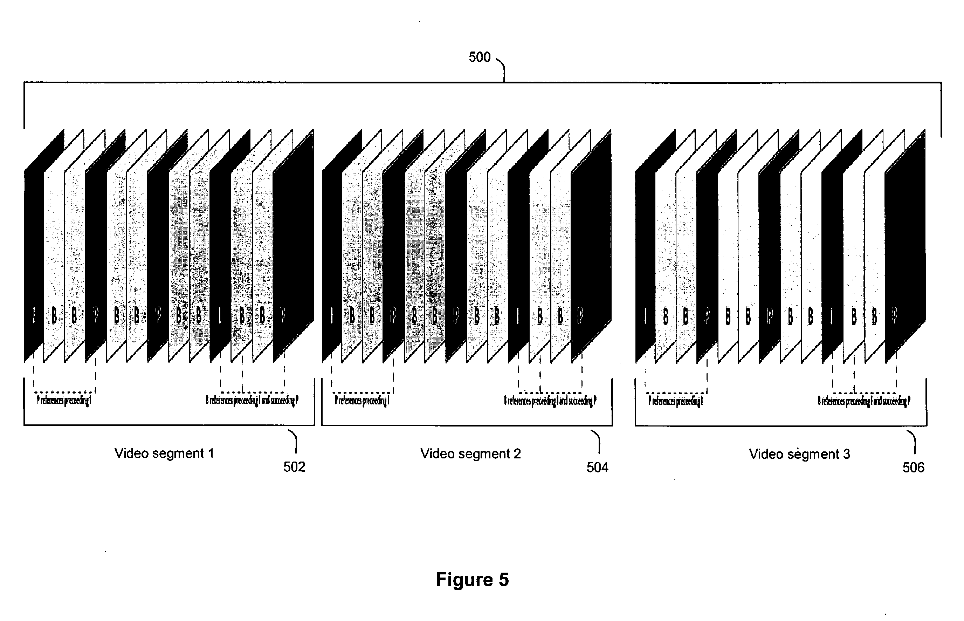

Figure 5 shows an example of an encoded video sequence 500 split into segments. The sequence 500, for simplicity, is shown to have 39 frames, and in this example is shown to be split into 3 segments 502, 504 and 506. Each segment is 13 frames in length. Each segment in this example starts with an I-frame.

Referring back to Figure 2, in step 204, the target constraints are set by the control module 124. The constraints are the operational constraints of client start-up delay $t_d$, client buffer size Bs, and target bit rate T. The target constraints can be stored in the memory 110.

The client start-up delay $t_d$ is the minimum delay that the end user receiving the encoded VBR stream has to "wait" before sufficient data has been buffered for the video sequence to be played back without buffer underflow occurring. This is measured in seconds. The start up delay is used by the client to fill its buffer to some threshold level at which it can safely begin play back of the buffered video. The client buffer size Bs is the maximum storage space allocated to the video stream at the client, measured in bits. If this limit is exceeded, buffer overflow occurs.

The target bit rate T is the bandwidth allocated to the encoded bitstream for streaming a video sequence from the server to the client. Whilst the method adopts a VBR scheme, in practice, there are still practical fixed limits on the maximum bit rate that the channel carrying the bitstream can handle. This is measured in bits per second.

In examples of the present invention, the video sequence is encoded in such a manner to meet these target constraints. The aim is also to encode the video with a constant perceptual quality, which can be done in a number of ways. One method is to encode each picture in such a way that the value of a quality parameter for that picture is equal to a target value for the quality parameter (or at least tend to reduce deviations from that target). One encoding parameter that affects perceptual quality is the quantiser index. Furthermore, perceptual quality can be also be affected by masking effects based on contrast in the picture. International patent application WO 2009/112801 describes a method whereby a quality measure iMOS (instantaneous mean opinion score) for a given picture is calculated as:

$$iMOS = -14.552 - 0.429 \times QP + 20.833 \times \log QP + 0.072 \times C \qquad \textbf{(1)}$$

where QP is the average quantisation index used in H264 encoding of the picture, and C is the contrast measure and provides a measure of the masking capability of the picture. Equation (1) can be used by the control module 124 to calculate the necessary quantisation index, once the contrast measure C is determined and the iMOS set, use in encoding the video sequence. In order to meet the target constraints, the iMOS will need to be set at a particular value as will be described later below.

However, equation (1) is not straightforward to solve, so instead the log function is approximated by the following quadratic function:

$$iMOS = aQP^2 + bQP + c_1C + c_2 \qquad \textbf{(2)}$$

where a = 0.00503, b = 0.1742, $C_1$ = 0.072 and $C_2$ = 2.649 determined by analysing the results of subjective tests using coded training sequences. Equation (2) is much simpler to solve than equation (1) by applying the usual formula for solving a quadratic:

$$QP = \frac{-b - \sqrt{b^2 - 4a(c_1 C + c_2 - iMOS)}}{2a} \qquad (3)$$

Thus, to encode a given picture with a constant value of iMOS, the contrast measure C must be determined for the picture and the iMOS set. Equation (3) can then be used to determine the average quantiser index QP that must be used for that picture. The quantiser index for each macroblock can then be set to achieve this average value.

The contrast measure C can be calculated based on as follows. For each luminance pixel, a block of 8 pixels to the left of the pixel are considered and the average is calculated. The pixel's contrast is set to the absolute value of the difference between this average and the pixel value. The average contrast, C, for the whole picture is calculated as the average of the contrast values for the pixels whose blocks stay within the picture area when calculating the individual pixel contrast values

However, one problem with the calculation of the average contrast C, is that it should be measured on the decoded picture, but this is not available until encoding has taken place. Thus, one of the two following methods can be used to calculate the average contrast C in practice.

If a previous picture has been encoded with the same target iMOS, the predicted contrast for the present picture to be encoded, $C_{present-coded}$, is calculated as follows using details from the present and previous source (unencoded) pictures and the previous coded picture:

$$C_{present-coded} = C_{present-source} \times \left( \frac{C_{previous-coded}}{C_{previous-source}} \right) \qquad (4)$$

where $C_{present-source}$ is the contrast of the present unencoded (source) picture, $C_{previous-source}$ is the contrast of the previous unencoded (source) picture, and $C_{previous-coded}$ is the contrast of the previous coded picture.

Where the $C_{previous-source}$ and $C_{previous-coded}$ are not available, then the following linear model can be used:

$$C_{present-coded} = \alpha + \beta \times iMOS + \gamma C_{present-source} \qquad (5)$$

where $\alpha = -4$ ; $\beta = 1$; and $\gamma = 0.9$ are empirical coefficients.

Having determined the contrast for each picture using either equation (4) or (5) above, equation (3) can be used to determine the quantisation index required for each picture for a given iMOS. In this example, the iMOS used is referred to as $iMOS_{init}$, the initial iMOS. $iMOS_{init}$ can be set in step 204 when the target constraints are set, and can take any value from 1 to 5, preferably with a step size of 0.1. The value of $iMOS_{init}$ can be stored in memory 110.

The video sequence 104 is encoded in a 1st pass using the video coding module 124 in step 206, where the quantisation index for each picture is set according to equation (3) as described above. The resulting encoded video sequence is stored in memory 110.

In step 208, the bitstream from the 1st pass encoding is analysed and the encoding parameters are determined by the bitstream evaluation module 130. The aim is to determine if the target constraints (set in step 204) are met by the resulting encoded bitstream.

The parameters determined by the bitstream evaluation module include the number of bits produced per chunk i of the encoded video sequence, as well as the average quantiser per video chunk, and are stored in memory 110.

Equation (6) below gives the value of the client buffer state quantised per chunk i for an encoded video sequence from chunk i = 1 to N:

$$BS_t = \sum_{i=t_0}^{t}(\lambda - B_i)$$  (6)

where:

BS$_t$ is the predicted buffer state of the client, measured in bits at time t, starting at to, where t and to (0,1,2,3...N) and t >t$_o$;
$\lambda$ is the estimated bit rate, and initially set to T;
B$_i$ is the bits produced from video chunk i, where i = (1, 2, 3...N); and
N is the total number of video chunks in the encoded video sequence.

The evaluation of the encoding constraints, using equation (6), is performed as follows.

Firstly, each chunk i of the encoded video sequence is analysed to determine the number of bits, B$_i$, per encoded chunk i. From that, the average bit rate for the whole sequence is calculated (over all Bi). If the target bit rate T (as set in step 204) is greater than the calculated average bit rate, then the target bit rate $\lambda$ in equation (6) is set as $\lambda$ calculated average bit rate, else $\lambda$ = target bit rate T.

The values for B$_i$ can be stored in the memory 110 for use later in the rough and accurate estimation models described below.

Then, by applying equation (6) to each of the encoded video chunks i, with Bi known and $\lambda$ as calculated above, the minimum (BS$_{t(min)}$) and maximum (BS$_{t(max)}$) buffer state values can be extracted. This is done by calculating the buffer state value BS$_t$ for each chunk i using equation (6), then sorting the resulting buffer state values for BS$_t$ to get the maximum and minimum BS$_t$ values. From these two values of BS$_{t(min)}$ and BS$_{t(max)}$, the start-up delay experienced by the client and the buffer size required by the client can be calculated as follows:

If $BS_{t(min)} < 0$ , which indicates that the required bit rate of the chunk exceeds the estimated bit-rate parameter $\lambda$ then start-up delay t$_d$ is set as,

$$t_d = \left| BS_{t(\min)} \right| \big/ T$$  (7)

The start-up delay t$_d$ effectively allows the client to pre-load enough bits in its buffer to cope with the excess bits resulting from BS$_{t(min)}$.

The minimum client buffer size required is calculated as,

$$B_s = BS_{t(\max)} + \left( t_d \times T \right)$$  (8)

Otherwise, if BS$_{t(min)}$ >= 0, start-up delay t$_d$ is set as

$$t_d = 0 \qquad \text{(i.e. no start-up delay)}$$  (9)

and minimum client buffer size is set as

$$B_s = BS_{t(\max)}$$  (10)

The values of start-up delay t$_d$ and minimum buffer size B$_s$ associated with the encoded video sequence as determined in equations (7) and (8), or (9) and (10), are then compared to the original target constraints set in step 204. The result of the comparison can either be that the target constraints of start-up delay and client buffer size are met or they are not met. If the constraints are met, processing passes to step 212, where the encoded bitstream is ready for output. If the constraints are not met, then processing passes to step 214 where the video sequence is re-encoded.

Now, if the processing has passed to step 212, then the encoded video sequence (encoded in step 206) has been determined as meeting all the target constraints, and thus can be output for streaming via the video output interface 112.

In summary, equations (6) to (10) are used to determine if an encoded video sequence meets the target constraints. In particular, after extracting parameters associated with the encoded video sequence, and then applying a target bit rate T constraint, equations (6) to (10) determines a minimum required buffer size as well as a required start-up delay and compares these two evaluated constraints with the target constraints of client start-up delay $t_d$ and client buffer size $B_s$ to see if they are met.

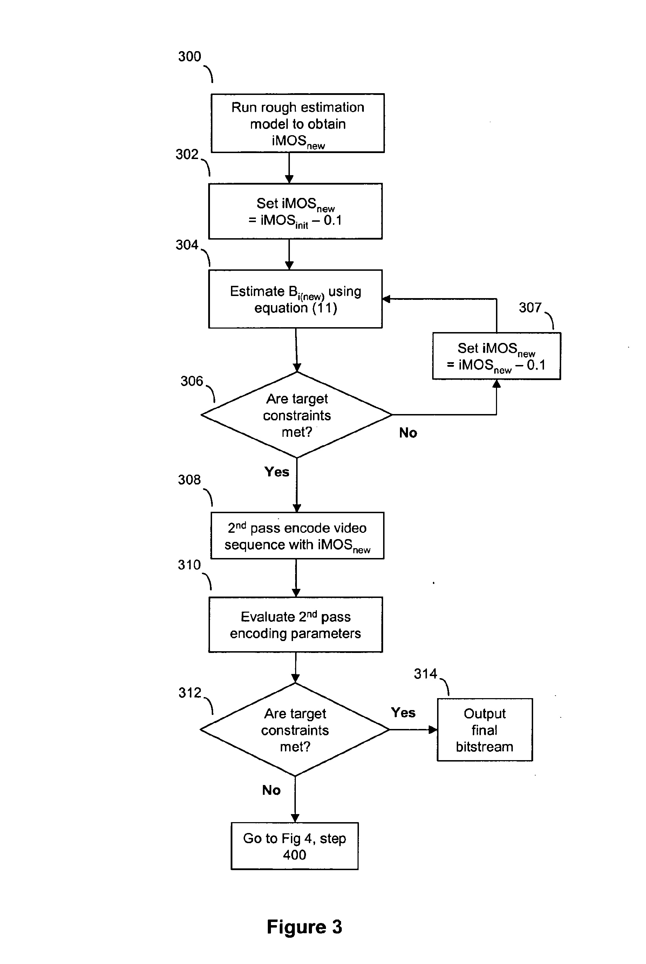

However, if the target constraints have not been met, then processing continues to step 300 in Figure 3.

The following example illustrates the evaluation in steps 208 and 210, where the target constraints are as follows:

T target bit rate = 2 Mbit/s
$t_d$ start-up delay = 2 seconds
Bs maximum client buffer size = 2Mbits
$iMOS_{init}$ = 3.5

A first pass encoding of a 3 second video sequence results in 3 chunks of encoded video, each 1 second long and of the following sizes:

Chunk 1 = 1.8 Mbits
Chunk 2 = 2.6 Mbits
Chunk 3 = 1.0 Mbits

The average bit rate for the encoded sequence is thus (1.8+2.6+1.0)/3 = 1.8Mbits/s. As this is less than T, $\lambda$ = 1.8.

Theoretically, even if $\lambda$ is greater than T, it may still be possible to stream the video if the start-up delay and buffer size allow adequate buffering of chunks before playback begins.

Next, the buffer states are calculated for each chunk using equation (6).
$BS_1$ = 1.8 - 1.8 = 0
**$BS_2$ =** 1.8-2.6 =-0.8
$BS_3$= 1.8-1.0=0.8
Therefore, $BS_{t(min)}$ = -0.8, and $BS_{t(max)}$ = 0.8.

As $BS_{t(min)}$ < 0, then the start-up delay $t_d$ is given by equation (7) and the minimum buffer size $B_s$ given by equation (8).

Therefore, using equation (7):

$$t_d = 0.8/2 = 0.4 \text{ seconds}$$

This means that a 0.4s start-up delay is required to buffer the excess bits produced by chunk 2 with a 2Mbit/s transmission rate.

The minimum buffer state to ensure the buffer does not empty is given by equation (8):

$$Bs = BS_{t(max)} + (t_d \times T) = 0.8 + (0.4 \times 2) = 1.6Mbits$$

Now, these calculated values of start-up delay and minimum buffer state can be compared with the target start-up delay and maximum buffer size to see if those constraints are met. The testing requires that both these constraints of start-up delay and maximum buffer size are satisfied. If either of these constraints are not met, then the testing results in a fail (and further encoding is required).

The conditions for meeting the constraints are:

For start-up delay $t_d$, calculated <= target.

For buffer size, calculated minimum buffer state <= maximum buffer size.

In this example, the calculated start-up delay of 0.4 seconds is less than the target start up delay of 2 seconds, so the start-up delay constraint is met.

Further, the calculated minimum buffer state is 1.6Mbts/s, which is less than the target maximum buffer size, so the buffer size constraint is met.

Therefore, in this worked example, both the start-up delay and buffer size constraints are met, and thus the 1st pass encoding is successful.

Now returning to Figure 3, in step 300, a rough estimation model is run by the perceptual quality prediction module 132 if the target constraints are not met. The rough estimation model estimates the bits, $B_{i,(new)}$, that will be produced per encoded video chunk in a further, 2nd, pass encoding step with a new iMOS. The estimate utilises the results from the 1st pass encoding, specifically the bits produced from the first pass and the iMOS used in that first pass, as well as the new value of iMOS (iMOSnew).

The aim is to evaluate the maximum value of $iMOS_{new}$ (best quality) using equation (11), which results in an encoded bitstream, with estimated values of $B_{i(new)}$ for each chunk i, that satisfies the target constraints when equations (6) to (10) are applied.

$B_{i(new)}$ is estimated using the following equation:

$$B_{i(new)} = [x(iMOS_{init} - iMOS_{new}) + 1] \times \sqrt{\frac{iMOS_{new}}{iMOS_{init}} \times B_{i(init)}} \qquad (11)$$

where,

x is a constant;

$iMOS_{init}$ is the value of iMOS used in the **1st** encoding set in step 204;

$iMOS_{new}$ is the new value of iMOS used for a 2nd pass encoding (can vary by increments of 0.1);

$B_{i(init)}$ is the actual number of bits produced for video chunk i from the 1st pass encoding in step 208;

$B_{i(new)}$ is the estimated number of bits produced for video chunk i.

It has been found that values for x ranging from 0.4 to 0.5 are effective in the estimation model, with a value of 0.44 particularly effective.

Thus, equation (11) gives a method of estimating the bits produced without actually having to encode the video stream and measure the resulting encoded bits. The method effectively multiplies the bits produced per chunk in the first encoding pass, $B_{i(init)},$ by a scaling factor, where the scaling factor is based on the $iMOS_{init}$ and $IMOS_{new}.$

One approach that can be used to estimate the optimal value for $iMOS_{new}$ is varied in equation (11) until the resulting estimated bitstream satisfies the target constraints. So, in step 302, $iMOS_{new}$ is set to $iMOS_{init}$ — 0.1. So if $iMOS_{init}$ was set at 4.0, then $iMOS_{new}$ will be 3.9. Whilst a difference of 0.1 has been used here, a larger or smaller difference could used. The decision to use a lower value for $iMOS_{new}$ is based on the fact that the 1st pass encode failed to meet the target constraints, and thus a 2nd attempt at encoding the bitstream to meet the constraints should at least use a lower iMOS to reduce the number of bits in the encoded bitstream to try and meet the target constraints.

In step 304, equation (11), using the new value of $iMOS_{new}$ and values of $iMOS_{init}$ and $B_{i(init)}$ from the 1st pass encode, estimates the bits $B_{i(new)}$ per chunk for each chunk i of the video sequence.

In step 306, the resulting values of $B_{i(new)}$ are substituted for $B_i$ in equation (6), and the methods associated with equations (6) to (10) described above (and in step 208) are performed to determine if the target constraints are met. If the target constraints are met, then processing passes to step 308, which performs a 2nd pass encoding. If the target constraints are not met, processing passes to step 307, where a lower value of $iMOS_{new}$ is selected (here preferably $iMOS_{new}$ = $iMOS_{new}$ — 0.1), and the loop starting at step 304 is repeated to estimate the resulting bits per chunk and test if the target constraints are met.

Whilst the above step 304 utilises equation (11) to estimate the bits produced for all the chunks i, in an alternative method, the estimate can be applied to just the chunks that produced $BS_{t(min)}$ and $BS_{t(max)},$ with a suitable scaling factor used estimate the average bit rate.

In step 308, the video sequence is encoded in a 2nd pass using the last value of $iMOS_{new}$ (as used in the previous estimation step 304). The video sequence is encoded by the video coding module 124, in the same manner as for the 1st pass encoding in step 206, where the quantisation index for each picture is set according to equation (3) as described earlier. The resulting encoded video is stored in the memory 110.

In step 310, the 2nd pass encoding parameters are determined by the bitstream evaluation module 130 from the encoded video from the 2nd pass. In step 312, tests are done to determine if the encoded bitstream meet the target constraints. Steps 310 and 312 operate in the same way on the 2nd pass encoded bitstream as steps 208 and 210 do on the 1st pass encoded bitstream (based on equations (6) to (10)).

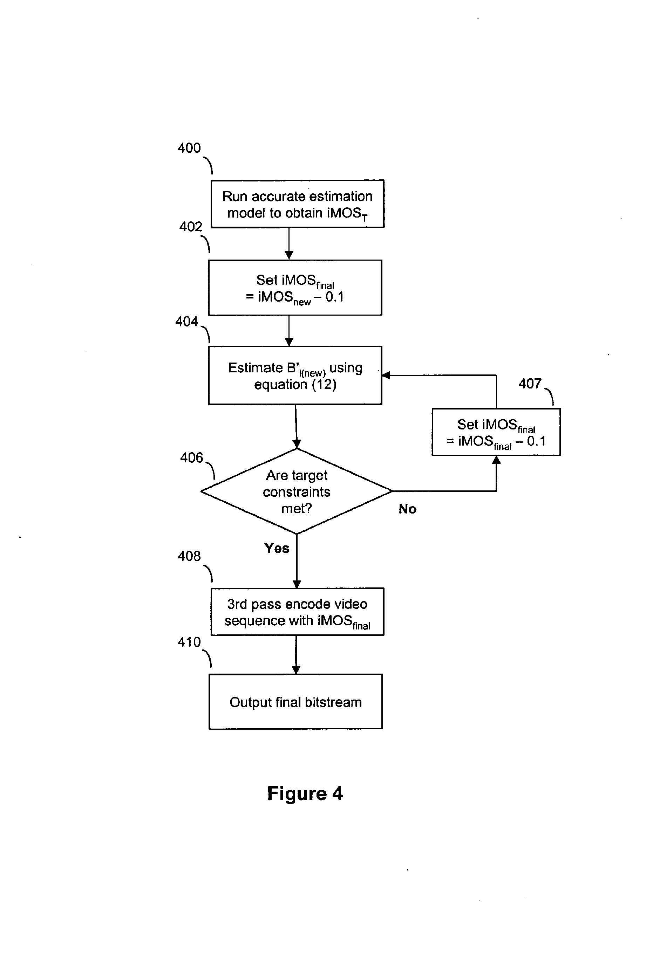

If the target constraints are met, then processing passes to step 314, where the encoded video bitstream is ready for output/streaming to the client. If the constraints are not met, then processing passes to step 400 in Figure 4, to re-encode the video sequence in a final pass after an accurate estimate is made of the bits that will be generated using an adjusted value of $iMOS_{new}$.

Whilst the evaluation of the encoded bitstream to determine if the target constraints have been met is described with reference to equations (6) to (10), the invention is not limited to that. In particular, other evaluation methods could be applied to the result of equation (11) to determine if target constraints are met.

In step 400 of Figure 4, an accurate estimation model is applied to the video sequence by the perceptual quality prediction module 132. The accurate estimation model determines the bits $B'_{i(new)}$ per chunk i that will be produced in a 3rd pass encoding step based on the encoding parameters resulting from the earlier 1st and 2nd pass encoding steps, together with a new value of iMOS, $iMOS_{final}$. The parameters used from the earlier encoding steps includes the bits produced per chunk and average quantiser used to encode each chunk. $iMOS_{final}$. is the iMOS used for this 3rd pass encoding.

The accurate estimation model provides the generated bits $B'_{i(new)}$ for each chunk i using the following equation:

$$B'_{i(new)} = a \times \exp\left[-b \times \left(iMOS_{final} - d\right)/c\right] \qquad (12)$$

where, a, b, c and d are modelling parameters given by:

$$a = [\ln(B1_i/B2_i)]/(Q2_i\text{-}Q1_i)$$

$$b = B1_i \times \exp(b \times Q1_i)$$

$$c = (iMOS_{init} - iMOS_{new})/(Q1_i - Q2_i)$$

$$d = ((iMOS_{init} - (c \times Q1_i))$$

and where:

$B1_i$ = bits per chunk i from the 1 st pass encoding;
$B2_i$ = bits per chunk i from the 2nd pass encoding;
$Q1_i$ = average quantiser per chunk i from the 1st pass encoding;
$Q2_i$ = average quantiser per chunk i from the 2nd pass encoding;

The average quantiser referred to above is the average quantiser index averaged across a chunk (i.e. across all the frames that comprise the chunk).

As in steps 300 to 306, equation (12) is used as a basis for determining the maximum value of $iMOS_{final}$ (best quality) that the video sequence can be encoded that results in an encoded bitstream that satisfies the target constraints when equations (6) to (10) are applied.

So, in step 402, $iMOS_{final}$ is set to $iMOS_{new}$ — 0.1, where $iMOS_{new}$ is the iMOS used to in the 2nd pass video encoding in step 308. As before, an increment of greater or less than 0.1 could be used instead.

In step 404, $IMOS_{final}$ is fed into equation (12) to determine the number of bits produced for a given chunk i, $B'_{i(new)}$. The variables used in equation (12), $B1_i$, $B2_i$, $Q1_i$, $Q2_i$, $iMOS_{init}$ and $iMOS_{new}$, are obtained from the the first and second encoding passes and respective encoded bitstreams.

In step 406, the resulting values of $B'_{i(new)}$ are substituted for $B_i$ in equation (6), and the methods associated with equations (6) to (10) described above (and in step 208) are performed to determine if the target constraints are met. If the target constraints are met, then processing passes to step 408, which performs a 3rd and final pass encoding using iMOS$_{final}$. If the target constraints are not met, processing passes to step 407, where a lower value of iMOS$_{final}$ is selected (here preferably IMOS$_{final}$ = iMOS$_{final}$ — 0.1), and the loop starting at step 404 is repeated to estimate the resulting bits per chunk and test of the target constraints are met.

In step 408, the video sequence is encoded in a 3nd pass using the last value of iMOS$_{final}$ (as used in the previous estimation step 404). The video sequence is encoded by the video coding module 124, where the quantisation index for each picture is set according to equation (3) as described earlier. The resulting encoded video is stored in the memory 110 or can be output directly for streaming to the client in step 410.

Whilst equation (12) has been described with reference to the encoding and output from the 1st and 2nd pass encoded bitstreams as described above, it should be appreciated that the method could still be applied to a video sequence encoded at two different qualities. The average quantiser $Q_1$ and $Q_2$ used in the encoding of each of those bitstreams, together with the bits produced per chunk can be used in equation (12) to calculate the number of bits that will be produced per chunk in 3rd encoding pass if a certain video encoding quality is used.

Exemplary embodiments of the invention are realised, at least in part, by executable computer program code which may be embodied in application program data provided for by the program modules. When such computer program code is loaded into the memory 110 for execution by the processor 106, it provides a computer program code structure which is capable of performing at least part of the methods in accordance with the above described exemplary embodiments of the invention.

Furthermore, a person skilled in the art will appreciate that the computer program structure referred can correspond to the process flow charts shown in Figures 2, 3 and 4, where each step of the flow chart can correspond to at least one line of computer program code and that such, in combination with the processor, provides apparatus for effecting the described process.

In general, it is noted herein that while the above describes examples of the invention, there are several variations and modifications which may be made to the described examples without departing from the scope of the present invention as defined in the appended claims. One skilled in the art will recognise modifications to the described examples.

**Claims**

1. A method of predicting the state of a buffer at a client, said client configured to receive an encoded video sequence over a transmission channel, wherein said encoded video sequence comprises a plurality of segments and said transmission channel has an associated maximum bit rate, said method comprising:

   (i) analysing each segment of the encoded video to determine the number of bits associated with each segment;
   (ii) determining an estimated bit rate for the transmission of the encoded video sequence over the transmission channel to the client, said estimated bit rate equal to the lower of a) the maximum bit rate associated with the transmission channel, and b) the average bit rate associated with the encoded video sequence; and
   (iii) calculating a plurality of states of the buffer, each state associated with the time at which a respective segment of the encoded video is received at the client, wherein each state is given by the difference between the estimated transmission rate and the bit rate of the respective segment.

2. A method according to claim 1 further comprising:

   (iv) calculating the minimum buffer state from each of the plurality of buffer states, and if the minimum buffer state is less than zero, then calculating the estimated start-up delay at the client to be equal to the ratio of the magnitude of the minimum buffer state and the maximum bit rate of the transmission channel, else calculating the estimated start-up delay to be equal to zero;
   (v) comparing the estimated start-up delay against a predetermined target start-up delay for the client.

3. A method according to claim 2, further comprising

   (vi) calculating the maximum buffer state from each of the plurality of buffer states, and if the maximum buffer is less than zero, then calculating the estimated minimum client buffer size to be equal to the maximum buffer state summed with the product of the estimated start-up delay and the maximum bit rate of the transmission channel, else calculating the estimated minimum buffer size to be equal to maximum buffer state;
   (vii) comparing the estimated minimum buffer size against a predetermined target client buffer size.

**4.** A method according to claim 3, wherein if the estimated start-up delay is not greater than the predetermined target start-up delay, and if the estimated minimum buffer size is not greater than the target client buffer size, then transmitting the encoded video sequence to the client.

**5.** A method according to any preceding claim, wherein average bit rate associated with the encoded video sequence is equal to the sum of the bits associated with each segment divided by the duration of the video sequence.

**6.** A method according to any preceding claim when dependent on claim 3, wherein the video sequence is encoded at a first constant perceptual quality, and if the estimated start-up delay is greater than the predetermined target start-up delay, or if the estimated minimum buffer size is greater than the target client buffer size, then encoding the video sequence with a second perceptual quality, wherein the second perceptual quality is lower than the first perceptual quality.

CPU

106

Memory

110

Video
Interface
Out

112

encoded
video

104

| 120 | 122 |
| 124 | 126 |
| 128 | 130 |
| 132 | |

100

108

Video
Interface
In

102

video
sequence

104

Figure 1

200

Input video sequence

202

Split video sequence
into segments

204

Set target constraints

206

1$^{st}$ pass encode video
sequence with iMOS$_{init}$

208

Analyse encoded
bitstream and evaluate
encoding parameters

210

Are target
constraints
met?

**Yes**

212

Output final
bitstream

**No**

Go to Fig 3, step
300

**Figure 2**

**Figure 3**

400
Run accurate estimation
model to obtain iMOS$_T$

402
Set iMOS$_{final}$
= iMOS$_{new}$ − 0.1

404
Estimate B'$_{i(new)}$ using
equation (12)

407
Set iMOS$_{final}$
= iMOS$_{final}$ − 0.1

406
Are target
constraints
met?

**No**

**Yes**

408
3rd pass encode video
sequence with iMOS$_{final}$

410
Output final bitstream

## Figure 4

Video segment 1     502

Video segment 2     504

Video segment 3     506

**Figure 5**

**Europäisches Patentamt**
**European Patent Office**
**Office européen des brevets**

# EUROPEAN SEARCH REPORT

Application Number

EP 10 25 0696

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | I-M I-MING PAO ET AL: "Encoding Stored Video for Streaming Applications" IEEE TRANSACTIONS ON CIRCUITS AND SYSTEMS FOR VIDEO TECHNOLOGY, IEEE SERVICE CENTER, PISCATAWAY, NJ, US, vol. 11, no. 2, 1 February 2001 (2001-02-01), XP011014165 ISSN: 1051-8215 | 1-5 | INV.<br>H04N7/24<br>H04N7/26 |
| Y | * page 201, right-hand column, last paragraph - page 202, right-hand column, paragraph 2 * ----- | 6 | |
| Y | BO HAN ET AL: "VBR rate control for perceptually consistent video quality" IEEE TRANSACTIONS ON CONSUMER ELECTRONICS, IEEE SERVICE CENTER, NEW YORK, NY, US LNKD- DOI:10.1109/TCE.2008.4711253, vol. 54, no. 4, 1 November 2008 (2008-11-01), pages 1912-1919, XP011239765 ISSN: 0098-3063 * section IV * ----- | 6 | |
| X | US 2006/171457 A1 (DEGARRIDO DIEGO P [US] ET AL) 3 August 2006 (2006-08-03) * paragraph [0039] - paragraph [0049] * ----- | 1 | TECHNICAL FIELDS SEARCHED (IPC)<br><br>H04N |
| X | RIBAS-CORBERA JORDI ET AL: "A generalized hypothetical reference decoder for H.26L (proposal)" ITU-T VIDEO CODING EXPERTS GROUP (ITU-T SG16 Q.6), XX, XX, no. VCEG-N58, 24 September 2001 (2001-09-24), pages 1-15, XP002421825 * sections 2.1, 2.2 * ----- | 1 | |

-/--

The present search report has been drawn up for all claims

| Place of search | Date of completion of the search | Examiner |
|---|---|---|
| Berlin | 29 July 2010 | Kontopodis, D |

EPO FORM 1503 03.82 (P04C01)

# EP 2 373 025 A1

**EUROPEAN SEARCH REPORT**

Application Number

EP 10 25 0696

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | YEOM H Y ET AL: "An efficient transmission mechanism for stored video" PROTOCOLS FOR MULTIMEDIA SYSTEMS - MULTIMEDIA NETWORKING, 1997. PROCEEDINGS., IEEE CONFERENCE ON SANTIAGO, CHILE 24-27 NOV. 1997, LOS ALAMITOS, CA, USA,IEEE COMPUT. SOC, US LNKD-DOI:10.1109/PRMNET.1997.638888, 24 November 1997 (1997-11-24), pages 122-130, XP010258820 ISBN: 978-0-8186-7916-2 * section 4.1 * ----- | 1-6 | |
| A | YAN YANG ET AL: "Rate Control for VBR Video Over ATM: Simplification and Implementation" IEEE TRANSACTIONS ON CIRCUITS AND SYSTEMS FOR VIDEO TECHNOLOGY, IEEE SERVICE CENTER, PISCATAWAY, NJ, US, vol. 11, no. 9, 1 September 2001 (2001-09-01), pages 1045-1058, XP011014241 ISSN: 1051-8215 * section III * ----- | 1-6 | TECHNICAL FIELDS SEARCHED (IPC) |

The present search report has been drawn up for all claims

| Place of search | Date of completion of the search | Examiner |
|---|---|---|
| Berlin | 29 July 2010 | Kontopodis, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 10 25 0696

This annex lists the patent family members relating to the patent documents cited in the above-mentioned European search report.
The members are as contained in the European Patent Office EDP file on
The European Patent Office is in no way liable for these particulars which are merely given for the purpose of information.

29-07-2010

| Patent document cited in search report | Publication date | Patent family member(s) | Publication date |
|---|---|---|---|
| US 2006171457 A1 | 03-08-2006 | NONE | |

For more details about this annex : see Official Journal of the European Patent Office, No. 12/82

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 09112801 A

- WO 2009112801 A